# EUROPÄISCHE PATENTANMELDUNG

(11) **EP 3 544 265 A1**
(43) Veröffentlichungstag der Anmeldung: **25.09.2019**
(21) Anmeldenummer: 18162575.7
(22) Anmeldetag: 19.03.2018
(51) Int. Cl.: H04L 29/12

(54) **VERFAHREN ZUR BEREITSTELLUNG VON DIENSTEN DURCH EIN SERVER-SYSTEM AN AUTOMATISIERUNGSGERÄTE EINES INDUSTRIELLEN AUTOMATISIERUNGSSYSTEMS UND KONFIGURATIONSEINHEIT**

(71) Anmelder: Siemens Aktiengesellschaft, 80333 München (DE)
(72) Erfinder: Albrecht, Harald, 90475 Nürnberg (DE); Höme, Stephan, 90475 Nürnberg (DE)

(57) **Zusammenfassung**

Zur Bereitstellung von Diensten durch ein Server-System an IPv4-Automatisierungsgeräte, denen ausschließlich IPv4-Adressen zugeordnet sind, sind Dienste bereitstellende Server-Einheiten vorgesehen, denen aus einem die IPv4-Automatisierungsgeräte umfassenden Teilnetz nicht erreichbare IPv4-Adressen oder ausschließlich IPv6-Adressen zugeordnet sind. Eine Teilnetz-Konfigurationseinheit ruft von zumindest einem übergeordneten Namensdienst-Server zu den Server-Einheiten erste IPv4- oder IPv6-Adressen, zugeordnete Servernamen und Dienst-Spezifikationen ab. Für die Server-Einheiten reserviert die Teilnetz-Konfigurationseinheit jeweils zumindest eine innerhalb des Teilnetzes verfügbare zweite IPv4-Adresse. Aus den ersten IPv4- oder IPv6-Adressen der Server-Einheiten und den für die Server-Einheiten jeweils reservierten zweiten IPv4-Adressen ermittelt die Teilnetz-Konfigurationseinheit Adressumsetzungsregeln und stellt diese an einen dem Teilnetz zugeordneten Router bereit.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im Wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessautomatisierungssystems besteht in einer vollständigen und korrekten Erfassung und Abbildung von Komponenten des industriellen Prozessautomatisierungssystems in einem Engineerung- bzw. Projektierungssystem.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

EP 3 208 999 A1 betrifft ein Datenübertragungssystem, das zumindest einen ersten Teilnehmer und einen zweiten Teilnehmer umfasst, wobei der zweite Teilnehmer in einem Automatisierungsnetz einer Automatisierungsanlage angeordnet ist. Zur bidirektionalen Datenübertragung zwischen dem ersten Teilnehmer und dem zweiten Teilnehmer ist eine Kommunikationsschnittstelle vorgesehen, die als Agent-Gateway ausgestaltet ist.

Aus EP 3 267 661 A1 ist ein Netzwerksystem bekannt, das einen ersten Netzwerkteilnehmer mit mehreren Netzwerkgeräten umfasst. Die Netzwerkgeräte weisen zur Identifikation Identifikationsparameter auf. Außerdem sind ein zweiter Netzwerkteilnehmer mit einer Cloud-Computing-Infrastruktur sowie ein Cloud Connector mit einer ersten Schnittstelle und einer zweiten Schnittstelle vorgesehen. Der Cloud Connector steht mittels der ersten Schnittstelle mit dem ersten Netzwerkteilnehmer in Verbindung und mittels der zweiten Schnittstelle mit dem zweiten Netzwerkteilnehmer in Verbindung. Darüber hinaus ist der Cloud Connector eingerichtet und ausgebildet, einen passiven Scan und einen aktiven Scan des ersten Netzwerkteilnehmers durchzuführen, so dass eine Identifikation von zumindest einem der Netzwerkgeräte durch den Cloud Connector bewerkstelligbar ist. Dabei ist zumindest ein Netzwerkgeräteprofil aus dem zweiten Netzwerkteilnehmer in den Cloud Connector ladbar. Der aktive Scan erfolgt auf Basis des geladenen zumindest einen Netzwerkgeräteprofils.

In EP 2 660 667 A2 ist ein Cloud-Gateway zur Kopplung eines industriellen Steuerungssystems an eine Cloud-Plattform beschrieben. Das Cloud-Gateway sammelt Daten von einer oder mehreren industriellen Steuerungen, Zählern, Sensoren oder anderen Automatisierungsgeräten. Optional führt das Cloud-Gateway zusätzliche Transformationen an den Daten durch, um einen Kontext hinzuzufügen, die Daten zusammenzufassen, zu filtern, neu zu formatieren bzw. zu verschlüsseln. Entsprechende Daten sendet das Cloud-Gateway an eine Cloud-Plattform, die durch eine oder mehrere Cloud-basierte Anwendungen oder Dienste verwendet wird. Das Cloud-Gateway kann Cloud-basierte Datenerfassung sowohl von stationären als auch mobilen industriellen Systemen ermöglichen. Außerdem kann das Cloud-Gateway auch Store-and-Forward-Logik unterstützen, wodurch industrielle Daten temporär im lokalen Speicher gespeichert werden können, falls eine Kommunikation zwischen dem Cloud-Gateway und der Cloud-Plattform gestört ist.

Aus EP 2 955 904 B1 ist ein Verfahren zur Vergabe von Kommunikationsnetzadressen für Netzteilnehmer eines segmentierten Netzes mit mehreren Subnetzen bekannt. Die Subnetze sind jeweils über einen Subnetz-Router an ein sie verbindendes Sammelnetz angeschlossen. Dabei wird von den Subnetz-Routern durch einen Austausch von über das Sammelnetz verteilten Router-Nachrichten dezentral ein gemeinsamer Adressbereich ermittelt, und innerhalb des Adressbereichs werden Kommunikationsnetzadressen für die Netzteilnehmer festgelegt.

Zur Datenübermittlung innerhalb eines industriellen Automatisierungssystems, das zumindest ein Teilnetz mit einer Gruppe von Kommunikationsgeräten und einem Teilnetz-Steuerungsgerät umfasst, erfasst eine dem Teilnetz-Steuerungsgerät zugeordnete Namens- oder Konfigurationsdienstkomponente entsprechend EP 3 062 490 A1 für die Gruppe von Kommunikationsgeräten IPv4-Adressen und zugeordnete Gerätenamen. Für die Gruppe von Kommunikationsgeräten wird aus einem dem Teilnetz zugeordneten IPv6-Präfix und den IPv4-Adressen der Kommunikationsgeräte jeweils eine IPv6-Adresse berechnet. Aus den IPv4-Adressen der Kommunikationsgeräte und den berechneten IPv6-Adressen werden Adressumsetzungsregeln ermittelt, die durch eine dem Teilnetz-Steuerungsgerät zugeordnete Adressumsetzungseinheit für eine Adressumsetzung zwischen IPv4-Adressen und IPv6-Adressen angewendet werden. Die berechneten IPv6-Adressen und die zugeordneten Gerätenamen werden in einem übergeordneten Namensdienst-Server gespeichert.

In Internet Engineering Task Force (IETF), Request for Comments (RFC) 6145 und 6146, ISSN 2070-1721, April 2011 (siehe http://www.rfc-base.org/txt/rfc-6145.txt und http://www.rfc-base.org/txt/rfc-6146.txt) ist eine Umsetzung von Transmission Control Protocol (TCP)- und User Datagram Protocol (UDP) Kommunikationsverbindungen, die auf Internet Protocol, Version 6 (IPv6) basieren, auf Internet Protocol, Version 4 (IPv4) basierte Kommunikationsverbindungen beschrieben. Eine derartige Umsetzung wird dabei als NAT64 (Network Address Translation) bezeichnet. Mittels NAT können IPv6-basierte Kommunikationsgeräte auf IPv4-basierte Kommunikationsgeräte zugreifen, indem insbesondere eine Adressformatanpassung vorgenommen wird. Im Rahmen von NAT64 nutzen IPv6-Kommunikationsgeräte für einen Zugriff auf IPv4-Kommunikationsgeräte virtuelle IPv6-Adressen, die mittels eines NAT64-Servers durch den IPv4-Kommunikationsgeräten zugeordnete IPv4-Adressen ersetzt werden. In analoger Weise werden Kommunikationsnetzadressen für Rückkanäle von IPv4-Kommunikationsgeräten zu IPv6-kommunikationsgeräten umgesetzt.

Darüber hinaus ist aus IETF RFC 6147 (siehe http://www.rfc-base.org/txt/rfc-6147.txt) bekannt, in einem Domain Name System (DNS) aus IPv4-Adresseinträgen, die als A Resource Records (RR) bezeichnet werden, zugeordnete IPv6-Adresseinträge (AAAA Resource Records) zu berechnen und diese durch DNS-Server bereitzustellen. Eine Ableitung von AAAA Resource Records aus A Records kann grundsätzlich manuell durch einen DNS-Administrator durchgeführt, mittels einer IP Adress Management (IPAM) Lösung projektiert oder mittels DNS64-Servern laufend automatisch ermittelt werden.

Aus US 7 333 510 B1 ist ein Kommunikationssystem bekannt, dass ein erstes IPv6-basiertes Teilnetz 202, ein zweites IPv4-basiertes Teilnetz und ein drittes IPv4-basiertes Teilnetz umfasst. Jedes Teilnetz umfasst jeweils einem DNS-Server und mehreren IPv6- bzw. IPv4-basierte Kommunikationsgeräte. In den DNS-Servern werden jeweils Teilnetz-individuell Gerätename-Adress-Zuordnungen für die vom jeweiligen Teilnetz umfassten Kommunikationsgeräte erfasst. Die drei Teilnetze sind über einen Router mit integrierter NAT-Einheit miteinander verbunden. Kann eine Namensauflösungsanfrage eines anfragenden Kommunikationsgeräts zur Ermittlung einer Adresse eines gesuchten Kommunikationsgeräts durch den DNS-Server innerhalb seines Teilnetzes nicht aufgelöst werden, so wird die Namensauflösungsanfrage über den Router an die DNS-Server der übrigen Teilnetze weitergeleitet. Eine die Adresse des gesuchten Kommunikationsgeräts umfassende Antwort auf die Namensauflösungsanfrage wird durch den DNS-Server im Teilnetz des gesuchten Kommunikationsgeräts zunächst an den Router übermittelt. Falls das anfragende Kommunikationsgerät auf einer anderen IP-Version basiert als das gesuchte Kommunikationsgerät, wird durch die NAT-Einheit des Routers eine IPv4-Adresse in eine IPv6-Adresse bzw. umgekehrt umgewandelt. Die Antwort auf die Namensauflösungsanfrage wird abschließend mit der ggf. umgewandelten Adresse durch Router an das anfragende Kommunikationsgerät übermittelt.

In US 2004/001509 A1 ist wird eine Umwandlung zwischen IPv4-Adressen und IPv6-Adressen beschreiben, wobei eine Nutzung eines Application Level Gateways in einer NAT-Einheit vermieden wird, um eine Sitzung zwischen einem IPv4-Netzknoten und einem IPv6-Netzknoten aufzubauen. Hierzu wird aus einem Vorrat verfügbarer IPv4-Adresse eine temporäre IPv4-Adresse ausgewählt. Die ausgewählte temporäre IPv4-Adresse wird in einen Nutzdatenbereich eines IPv6-Datenpakets eingezufügt und dieses IPv6-Datenpaket von einem IPv6-Quell-Netzknoten an einen IPv4-Ziel-Netzknoten übermittelt. In einer NAT-Einheit wird die temporäre IPv4-Adresse aus dem Nutzdatenbereich des IPv6-Datenpakets entnommen und die IPv6-Quell-Adresse zur Bildung eines IPv4-Datenpakets durch die temporäre IPv4-Adresse ersetzt. Nach Ersetzung der IPv6-Quell-Adresse durch die temporäre IPv4-Adresse erfolgt eine Übermittlung des IPv4-Datenpakets von der NAT-Einheit an den IPv4-Zielnetzknoten.

Aufgrund zunehmender Bedeutung von Cloud-, Fog- oder Edge-Computing-Systemen besteht ein Bedürfnis darin, durch entsprechende Server-Systeme bereitgestellte Dienste auch für bestehende Kommunikations- oder Automatisierungsgeräte verfügbar zu machen. Insbesondere bei Kommunikations- oder Automatisierungsgeräten, die lediglich einen IPv4-, aber keinen IPv6-Kommunikationsprotokoll-Stapel verarbeiten können (IPv4-basierte Geräte), besteht ein großes Problem bei einer Nutzung von Diensten, die durch ausschließlich über IPv6-Adressen erreichbare Server bereitgestellt werden (IPv6-basierte Geräte). Eine Erweiterung von Gerätefirmware bestehender IPv4-basierter Kommunikations- oder Automatisierungsgeräte um IPv6-Kommunikationsprotokoll-Funktionen ist vielfach nur mit sehr hohem technischen Aufwand möglich, mitunter sogar gar nicht. Auch bei Diensten, die durch über IPv4-Adressen erreichbare Server bereitgestellt werden, kann ein Problem darin bestehen, dass aufgrund knapper bzw. nur lokal gültiger IPv4-Adressen keine durchgängigen Client-Server-Verbindungen möglich sind.

Der vorliegenden Erfindung liegt daher die Aufgabe zugrunde, ein Verfahren zur Bereitstellung von Diensten durch IPv6-basierte Server oder durch nicht durchgängig über ihre IPv4-Adressen erreichbare Server an IPv4-basierte industrielle Automatisierungsgeräte zu schaffen, das eine zuverlässig und aufwandsarm zu realisierende Nutzung der Dienste ermöglicht, sowie eine geeignete Vorrichtung zur Durchführung des Verfahrens zu anzugeben.

Diese Aufgabe wird erfindungsgemäß durch ein Verfahren mit den in Anspruch 1 angegebenen Merkmalen und durch eine Konfigurationseinheit mit den in Anspruch 20 angegebenen Merkmalen gelöst. Vorteilhafte Weiterbildungen der vorliegenden Erfindung sind in den abhängigen Patentansprüchen angegeben.

Das erfindungsgemäße Verfahren dient zur Bereitstellung von Diensten durch ein Server-System an Automatisierungsgeräte eines industriellen Automatisierungssystems, das zumindest ein Teilnetz mit einer Teilnetz-Konfigurationseinheit und mehreren IPv4-Automatisierungsgeräten umfasst, denen ausschließlich IPv4-Adressen zugeordnet sind. Das Server-System umfasst Dienste bereitstellende vorgegebene Server-Einheiten, denen aus dem Teilnetz nicht erreichbare IPv4-Adressen oder ausschließlich IPv6-Adressen zugeordnet sind. Die Teilnetz-Konfigurationseinheit ruft von zumindest einem übergeordneten Namensdienst-Server zu den vorgegebenen Server-Einheiten erste IPv4- oder IPv6-Adressen, zugeordnete Servernamen und Dienst-Spezifikationen ab. Außerdem reserviert die Teilnetz-Konfigurationseinheit für die vorgegebenen Server-Einheiten jeweils zumindest eine innerhalb des Teilnetzes verfügbare zweite IPv4-Adresse.

Die durch die vorgegebenen Server-Einheiten bereitgestellten Dienste können beispielsweise Anwendungen bzw. Funktionen zur System-, Prozess- bzw. Geräteüberwachung, zur Gerätesteuerung bzw. -konfiguration, zur Erfassung bzw. Analyse von den IPv4-Automatisierungsgeräten zugeordneten Messwerten bzw. Zustandsinformationen sowie Kommunikations- bzw. Automatisierungsfunktionen umfassen. Darüber hinaus sind der übergeordnete Namensdienst-Server und der Namensdienst-Server des Teilnetzes vorzugsweise Domain Name System Server. Ferner kann das Teilnetz eine oder mehrere Zellen des industriellen Automatisierungssystems umfassen, die wiederum mehrere Automatisierungsgeräte umfassen.

Erfindungsgemäß fordert die Teilnetz-Konfigurationseinheit für die vorgegebenen Server-Einheiten eine Erfassung der reservierten zweiten IPv4-Adressen, der zugeordneten Servernamen und der Dienst-Spezifikationen in einem Namensdienst-Server des Teilnetzes an. An diesen Namensdienst-Server des Teilnetzes richten die IPv4-Automatisierungsgeräte Namensauflösungsanfragen bzw. Anfragen zu verfügbaren Diensten. Mittels vom Namensdienst-Server des Teilnetzes abgefragter Adressinformationen und mittels eines dem Teilnetz zugeordneten Routers, der eine Adressumsetzungseinheit umfasst, bauen die IPv4-Automatisierungsgeräte Transportschicht-Verbindungen zu vorgegebenen Server-Einheiten zur Nutzung bereitgestellter Dienste auf.

Die Teilnetz-Konfigurationseinheit ermittelt erfindungsgemäß aus den ersten IPv4- oder IPv6-Adressen der vorgegebenen Server-Einheiten und den für die vorgegebenen Server-Einheiten jeweils reservierten zweiten IPv4-Adressen Adressumsetzungsregeln und stellte diese an den Router bereit. Dementsprechend wendet die Adressumsetzungseinheit des Routers die bereitgestellten Adressumsetzungsregeln für eine Adressumsetzung zwischen ersten IPv4- oder IPv6-Adressen und zweiten IPv4-Adressen an. Der Router kann beispielsweise über ein Weitverkehrsnetz oder über ein industrielles Kommunikationsnetz mit dem Server-System verbunden sein.

Mit der vorliegenden Erfindung können Dienste, die durch IPv6-basierte Server oder durch nicht durchgängig über ihre IPv4-Adressen erreichbare Server bereitgestellt werden, an IPv4-basierten Automatisierungsgeräten genutzt werden, ohne dass hierfür Änderungen an bestehenden Automatisierungsgeräten erforderlich sind. Außerdem werden der Namensdienst-Server und der Router, die dem die IPv4-basierten Automatisierungsgeräte umfassenden Teilnetz zugeordnet sind, mittels des erfindungsgemäßen Verfahrens automatisch für eine Nutzung der durch die vorgegebenen Server-Einheiten bereitgestellten Dienste konfiguriert. Eine fehleranfällige manuelle Konfiguration entfällt also.

Die IPv4-Automatisierungsgeräte umfassen insbesondere jeweils eine Vermittlungsfunktionseinheit zur Verarbeitung eines IPv4-Kommunikationsprotokollstapels, während vorgegebene IPv6-Server-Einheiten, denen ausschließlich IPv6-Adressen zugeordnet sind, beispielweise jeweils eine Vermittlungsfunktionseinheit zur Verarbeitung eines IPv6-Kommunikationsprotokollstapels umfassen. Darüber hinaus umfassen die IPv4-Automatisierungsgeräte insbesondere keine Vermittlungsfunktionseinheiten zur Verarbeitung eines IPv6-Kommunikationsprotokollstapels, während die vorgegebenen IPv6-Server-Einheiten beispielsweise keine Vermittlungsfunktionseinheiten zur Verarbeitung eines IPv4-Kommunikationsprotokollstapels umfassen.

Vorzugsweise berechnet die Teilnetz-Konfigurationseinheit für die IPv4-Automatisierungsgeräte aus einem IPv6-Präfix, das dem Teilnetz, einer jeweiligen Automatisierungszelle oder dem Router zugeordnet ist, und den IPv4-Adressen der IPv4-Automatisierungsgeräte jeweils eine IPv6-Adresse. Außerdem ermittelt die Teilnetz-Konfigurationseinheit für die IPv4-Automatisierungsgeräte aus den IPv4-Adressen der IPv4-Automatisierungsgeräte und den berechneten IPv6-Adressen Adressumsetzungsregeln und stellt diese an den Router für eine Adressumsetzung bereit. Damit sind die IPv4-Automatisierungsgeräte auch bei durch die vorgegebenen Server-Einheiten initiierten Transportschicht-Verbindungen zuverlässig erreichbar. Darüber hinaus ruft die Teilnetz-Konfigurationseinheit zu den durch die vorgegebenen Server-Einheiten bereitgestellten Diensten vorzugsweise auch Port-Nummern vom übergeordneten Namensdienst-Server ab, so dass der Router die Port-Nummern unverändert für die Adressumsetzung übernehmen kann. Damit kann ein fehleranfälliges Port-Remapping vermieden werden. Außerdem können auf Basis der Port-Nummer auch Firewall-Regeln für eine Sicherung des industriellen Automatisierungssystems gegenüber unerwünschten Zugriffen effizient definiert werden.

Entsprechend einer vorteilhaften Ausgestaltung der vorliegenden Erfindung ruft die Teilnetz-Konfigurationseinheit zu vorgegebenen IPv6-Server-Einheiten, denen ausschließlich IPv6-Adressen zugeordnet sind, AAAA Resource Records entsprechend IETF RFC 3596 und zu den bereitgestellten Diensten SRV Resource Records entsprechend IETF RFC 2782 bzw. IETF RFC 6335 vom übergeordneten Namensdienst-Server ab. Vorzugsweise ruft die Teilnetz-Konfigurationseinheit zu den vorgegebenen IPv6-Server-Einheiten Fully Qualified Domain Names (FQDN) und zu den bereitgestellten Diensten Port-Nummern vom übergeordneten Namensdienst-Server ab. Auf diese Weise kann die vorliegende Erfindung konform zu bestehenden Standards realisiert werden.

Entsprechend einer weiteren vorteilhaften Ausgestaltung der vorliegenden Erfindung entnimmt die Teilnetz-Konfigurationseinheit oder der Router aus den vom übergeordneten Namensdienst-Server abgerufenen Fully Qualified Domain Names der vorgegebenen IPv6-Server-Einheiten jeweils einen Host-Name-Anteil. Aus den Host-Name-Anteilen sowie aus einem dem Teilnetz oder einer jeweiligen Automatisierungszelle zugeordneten Domänennamen erzeugt die Teilnetz-Konfigurationseinheit oder der Router innerhalb des Teilnetzes durch die IPv4-Automatisierungsgeräte verwendbare Fully Qualified Domain Names. Vorzugsweise fordert die Teilnetz-Konfigurationseinheit für die vorgegebenen IPv6-Server-Einheiten eine Erfassung der durch die Teilnetz-Konfigurationseinheit erzeugten Fully Qualified Domain Names als zugeordnete Servernamen im Namensdienst-Server des Teilnetzes an. Somit kann einfache und fehlerfreie originär IPv6-basierter Dienste für die IPv4-Automatisierungsgeräte gewährleistet werden.

Die Teilnetz-Konfigurationseinheit reserviert für die vorgegebenen Server-Einheiten jeweils eine innerhalb des Teilnetzes verfügbare zweite IPv4-Adresse beispielsweise durch eine IPv4-Adressanforderung bei einem DHCP-Server innerhalb des Teilnetzes. Entsprechend einer alternativen Ausgestaltung der vorliegenden umfasst die Teilnetz-Konfigurationseinheit eine DHCP-Server-Funktionseinheit oder eine DHCP-Relay-Funktionseinheit. Dementsprechend können die innerhalb des Teilnetzes verfügbaren zweiten IPv4-Adressen den vorgegebenen Server-Einheiten mittels der DHCP-Server-Funktionseinheit oder DHCP-Relay-Funktionseinheit der Teilnetz-Konfigurationseinheit zugeordnet werden.

Entsprechend einer besonders bevorzugten Weiterbildung der vorliegenden Erfindung erstellt die Teilnetz-Konfigurationseinheit anhand der ersten IPv4- oder IPv6-Adressen der vorgegebenen Server-Einheiten bzw. anhand der für die vorgegebenen Server-Einheiten jeweils reservierten zweiten IPv4-Adressen Firewall-Regeln und stellt diese an ein dem Teilnetz zugeordnetes Firewall-System zur Anwendung bereit. Auf diese Weise können White Lists für das Firewall-System entsprechend vorliegenden Informationen über gewünschte Dienste bereitstellende Server-Einheiten automatisch definiert werden. Grundsätzlich können zusätzlich auch Black Lists für Dienste definiert werden, die nur durch ausgewählte Automatisierungsgeräte genutzt werden dürfen.

Der dem Teilnetz zugeordnete Router weist vorzugsweise eine erste Vermittlungsfunktionseinheit zur Verarbeitung eines IPv4-Kommunikationsprotokollstapels und eine zweite Vermittlungsfunktionseinheit zur Verarbeitung eines IPv6-Kommunikationsprotokollstapels auf. Dabei greift jede der beiden Vermittlungsfunktionseinheiten über einen Kommunikationsnetzadapter-Treiber auf einen Kommunikationsnetzadapter des Routers zu. Jeder Kommunikationsnetzadapter umfasst wiederum eine Sende- und Empfangseinheit und eine Steuerungseinheit zur Koordination eines Zugriffs auf ein Kommunikationsmedium. Über einen ersten Kommunikationsnetzadapter ist der Router mit zumindest einem IPv4-Automatisierungsgerät verbunden. Dagegen ist der Router über einen zweiten Kommunikationsnetzadapter mit zumindest einer vorgegebenen Server-Einheit verbunden. Auf diese Weise kann eine zuverlässige Adressumsetzung sichergestellt werden.

Die erfindungsgemäße Konfigurationseinheit für ein industrielles Automatisierungssystem ist zur Durchführung eines Verfahrens entsprechend vorangehenden Ausführungen vorgesehen. Dabei umfasst das industrielle Automatisierungssystem ein Teilnetz mit mehreren IPv4-Automatisierungsgeräten, denen ausschließlich IPv4-Adressen zugeordnet sind, während ein Server-System Dienste an Automatisierungsgeräte bereitstellende vorgegebene Server-Einheiten umfasst, denen aus dem Teilnetz nicht erreichbare IPv4-Adressen oder ausschließlich IPv6-Adressen zugeordnet sind. Die Konfigurationseinheit ist dafür ausgestaltet und eingerichtet, von zumindest einem übergeordneten Namensdienst-Server zu den vorgegebenen Server-Einheiten erste IPv4- oder IPv6-Adressen, zugeordnete Servernamen und Dienst-Spezifikationen abzurufen.

Darüber hinaus ist die Teilnetz-Konfigurationseinheit erfindungsgemäß dafür ausgestaltet und eingerichtet, für die vorgegebenen Server-Einheiten jeweils zumindest eine innerhalb des Teilnetzes verfügbare zweite IPv4-Adresse zu reservieren. Die Teilnetz-Konfigurationseinheit ist ferner dafür ausgestaltet und eingerichtet, für die vorgegebenen Server-Einheiten eine Erfassung der reservierten zweiten IPv4-Adressen, der zugeordneten Servernamen und der Dienst-Spezifikationen in einem Namensdienst-Server des Teilnetzes anzufordern. Außerdem ist die Teilnetz-Konfigurationseinheit dafür ausgestaltet und eingerichtet, aus den ersten IPv4- oder IPv6-Adressen der vorgegebenen Server-Einheiten und den für die vorgegebenen Server-Einheiten jeweils reservierten zweiten IPv4-Adressen Adressumsetzungsregeln zu ermitteln und an einen dem Teilnetz zugeordneten Router für eine Adressumsetzung bei durch die IPv4-Automatisierungsgeräte aufgebauten Transportschicht-Verbindungen zu vorgegebenen Server-Einheiten bereitzustellen.

Die vorliegende Erfindung wird nahfolgend an einem Ausführungsbeispiel anhand der Zeichnung näher beschrieben. Es zeigt
- Figur 1: ein zumindest eine IPv4-basierte Zelle umfassendes industrielles Automatisierungssystem sowie ein Cloud-Computing-System,
- Figur 2: eine Detaildarstellung eines einer Zelle zugeordneten Routers.

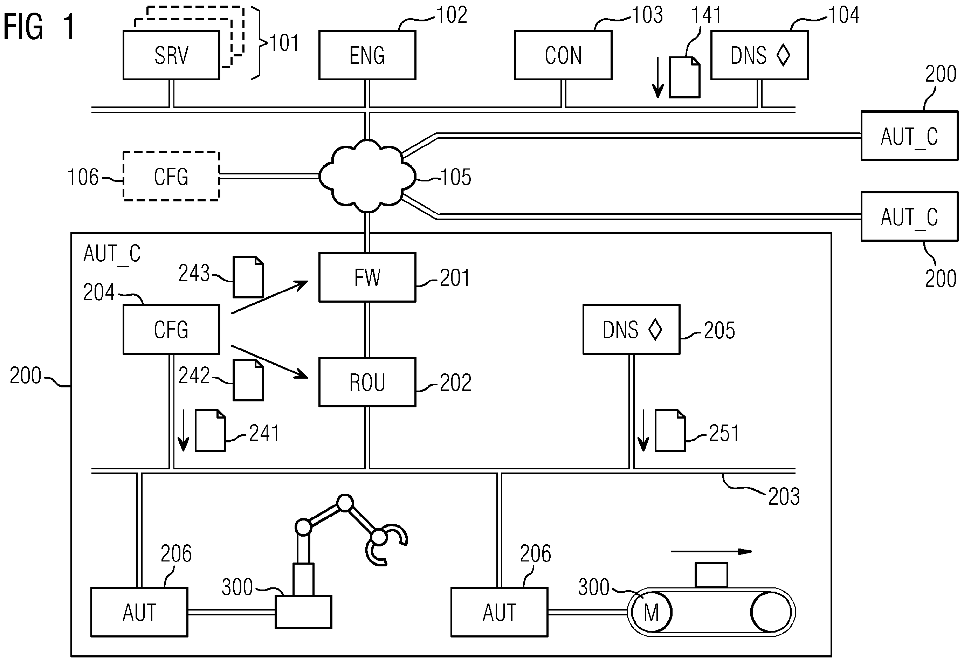

Das in Figur 1 dargestellte industrielle Automatisierungssystem umfasst Zellen 200 mit jeweils mehreren Automatisierungsgeräten 206, die im vorliegenden Ausführungsbeispiel über einen der jeweiligen Zelle 200 zugeordneten Router 202 mit einem Cloud-Computing-System 101 verbunden sind. Vorzugsweise ist dem Router 202 hierbei ein Firewall-System 201 vorgeschaltet, das grundsätzlich auch in den Router 202 integriert sein kann. Das Cloud-Computing-System 101 umfasst jeweils mehrere Server-Einheiten, durch die IT-Infrastruktur, wie Speicherplatz, Rechenleistung oder Anwendungssoftware, als Dienst bereitgestellt wird. Insbesondere können die durch die Server-Einheiten bereitgestellten Dienste Anwendungen bzw. Funktionen zur System-, Prozess- und Geräteüberwachung, zur Gerätesteuerung und -konfiguration, zur Erfassung und Analyse von den Automatisierungsgeräten 206 zugeordneten Messwerten und Zustandsinformationen sowie Kommunikations- und Automatisierungsfunktionen umfassen.

Die Zellen 200 können beispielsweise über ein IP-basiertes Weitverkehrsnetz 105 oder über ein industrielles Kommunikationsnetz mit dem Cloud-Computing-System 101 verbunden sein. Im letztgenannten Fall tritt an die Stelle des Cloud-Computing-Systems 101 ein Edge- oder Fog-Computing-System, das funktional im Wesentlichen einem Cloud-Computing-System entspricht und gegenüber diesem eine unterschiedliche administrative Kontrolle aufweist. Im vorliegenden Ausführungsbeispiel sind die Zellen 200 über das Weitverkehrsnetz 105 außerdem mit einem Engineering-System 102 zur Projektierung von Automatisierungsgeräten, mit einem Leitsystem 103 zur Überwachung von Automatisierungsgeräten und mit einem übergeordneten DNS-Server (Domain Name System) 104 verbunden.

Die Automatisierungsgeräte 206 können beispielsweise Bedien-und Beobachtungsstationen, speicherprogrammierbare Steuerungen, RFID-Lesegeräte oder Systeme für maschinelle Bildverarbeitung sein. Neben den Automatisierungsgeräten 206 können auch Netzinfrastrukturgeräte, wie Switche, Router oder Firewalls, direkt oder mittelbar mit dem Router 202 verbunden sein. Diese Netzinfrastrukturgeräte dienen insbesondere zum Anschluss von speicherprogrammierbaren Steuerungen, Eingabe/Ausgabe-Einheiten (I/O-Module) oder Bedien- und Beobachtungsstationen des industriellen Automatisierungssystems. Eingabe/Ausgabe-Einheiten können als dezentrale Peripheriemodule ausgestaltet sein, die entfernt von einer speicherprogrammierbaren Steuerung angeordnet sind.

Speicherprogrammierbare Steuerungen umfassen üblicherweise jeweils ein Kommunikationsmodul, eine Zentraleinheit sowie zumindest eine Eingabe/Ausgabe-Einheit. Über Kommunikationsmodule können speicherprogrammierbare Steuerungen beispielsweise mit dem Router 202 einem Switch oder Router oder zusätzlich mit einem Feldbus verbunden werden. Eingabe/Ausgabe-Einheiten dienen einem Austausch von Steuerungs- und Messgrößen zwischen speicherprogrammierbaren Steuerungen und durch die speicherprogrammierbaren Steuerungen gesteuerten Maschinen oder Vorrichtungen 300. Die Zentraleinheiten sind insbesondere für eine Ermittlung geeigneter Steuerungsgrößen aus erfassten Messgrößen vorgesehen. Obige Komponenten speicherprogrammierbarer Steuerungen werden vorzugsweise über ein Rückwandbus-System miteinander verbunden.

Bedien- und Beobachtungsstationen dienen zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere werden Bedien- und Beobachtungsstationen zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul.

Im vorliegenden Ausführungsbeispiel wird bei einer Bereitstellung von Diensten durch das Cloud-Computing-System 101 an die Automatisierungsgeräte 206 von einem Szenario ausgegangen, bei dem das industrielle Automatisierungssystem zumindest eine Zelle 200 mit mehreren IPv4-Automatisierungsgeräten 206 umfasst, denen ausschließlich IPv4-Adressen zugeordnet sind. Des Weiteren umfasst das Cloud-Computing-System im betrachteten Szenario Dienste bereitstellende vorgegebene Server-Einheiten, denen aus der Zelle 200 nicht erreichbare IPv4-Adressen oder ausschließlich IPv6-Adressen zugeordnet sind. Während die IPv4-Automatisierungsgeräte jeweils eine Vermittlungsfunktionseinheit zur Verarbeitung eines IPv4-Kommunikationsprotokollstapels und keine Vermittlungsfunktionseinheiten zur Verarbeitung eines IPv6-Kommunikationsprotokollstapels umfassen, weisen reine IPv6-Server-Einheiten, denen ausschließlich IPv6-Adressen zugeordnet sind, jeweils eine Vermittlungsfunktionseinheit zur Verarbeitung eines IPv6-Kommunikationsprotokollstapels auf, jedoch keine Vermittlungsfunktionseinheiten zur Verarbeitung eines IPv4-Kommunikationsprotokollstapels.

Zusätzlich umfasst die Zelle 200 mit den IPv4-Automatisierungsgeräten 206 eine Cloud-Dienst-Konfigurationseinheit 204 auf, die mit dem Router 203 und den IPv4-Automatisierungsgeräten 206 über ein Zell-internes Teilnetz 203 verbunden ist. Anstelle jeweils einer Cloud-Dienst-Konfigurationseinheit 204 pro Zelle 200 könnte auch eine gemeinsame Cloud-Dienst-Konfigurationseinheit 106 für mehrere Zellen 200 vorgesehen sein, die außerhalb der Zellen 200 angeordnet und beispielsweise direkt an das Weitverkehrsnetz 105 angebunden ist.

Die Cloud-Dienst-Konfigurationseinheit 204 ruft vom übergeordneten DNS-Server 104 insbesondere zu den IPv6-Server-Einheiten Informationen 141 ab, die erste IPv6-Adressen, zugeordnete Servernamen und Dienst-Spezifikationen umfassen. In entsprechender Weise gilt dies auch für IPv4-Server-Einheiten, denen aus der Zelle 200 nicht erreichbare IPv4-Adressen zugeordnet sind. Nachfolgende Ausführungen zu IPv6-Server-Einheiten und zu durch die IPv6-Server-Einheiten bereitgestellten Diensten sind damit in analoger Weise auf IPv4-Server-Einheiten übertragbar, denen aus der Zelle 200 nicht erreichbare IPv4-Adressen zugeordnet sind.

Insbesondere ruft die Cloud-Dienst-Konfigurationseinheit 204 zu den IPv6-Server-Einheiten AAAA Resource Records entsprechend IETF RFC 3596 und zu den bereitgestellten Diensten SRV Resource Records entsprechend IETF RFC 2782 und IETF RFC 6335 vom übergeordneten DNS-Server 104 ab. Außerdem fragt die Cloud-Dienst-Konfigurationseinheit 204 im vorliegenden Ausführungsbeispiel Fully Qualified Domain Names (FQDN) zu den IPv6-Server-Einheiten sowie Port-Nummern zu den bereitgestellten Diensten vom übergeordneten DNS-Server 104 ab. Obige Informationen können beispielsweise im Rahmen von DNS Updates entsprechend IETF RFC 2136 durch die IPv6-Server-Einheiten initiiert im übergeordneten DNS-Server 104 registriert werden.

Für die IPv6-Server-Einheiten reserviert die Cloud-Dienst-Konfigurationseinheit 204 jeweils zumindest eine innerhalb des Zell-internen Teilnetzes 203 verfügbare zweite IPv4-Adresse. Beispielsweise kann die Cloud-Dienst-Konfigurationseinheit 204 für die IPv6-Server-Einheiten jeweils eine innerhalb des Zell-internen Teilnetzes 203 verfügbare zweite IPv4-Adresse durch eine IPv4-Adressanforderung bei einem DHCP-Server innerhalb des Zell-internen Teilnetzes 203 reservieren. Alternativ hierzu kann die Cloud-Dienst-Konfigurationseinheit 204 eine DHCP-Server-Funktionseinheit oder eine DHCP-Relay-Funktionseinheit umfassen. In diesem Fall werden die innerhalb des Zell-internen Teilnetzes verfügbaren zweiten IPv4-Adressen den IPv6-Server-Einheiten mittels der DHCP-Server-Funktionseinheit oder DHCP-Relay-Funktionseinheit der Cloud-Dienst-Konfigurationseinheit 204 zugeordnet.

Die Cloud-Dienst-Konfigurationseinheit 204 fordert für die IPv6-Server-Einheiten eine Erfassung der reservierten zweiten IPv4-Adressen, der zugeordneten Servernamen und der Dienst-Spezifikationen in einem lokalen DNS-Server 205, der an das Zell-interne Teilnetz 203 angeschlossen ist, durch Übermittlung einer entsprechenden Anforderung 241 an den lokalen DNS-Server 205 an. An diesen lokalen DNS-Server 205 richten die IPv4-Automatisierungsgeräte 206 der Zelle 200 Namensauflösungsanfragen bzw. Anfragen zu verfügbaren Diensten. Mittels vom lokalen DNS-Server 205 abgefragter Adressinformationen 251 und mittels des der Zelle 200 zugeordneten Routers 202 bauen die IPv4-Automatisierungsgeräte 206 Transportschicht-Verbindungen zu den IPv6-Server-Einheiten zur Nutzung bereitgestellter Dienste auf.

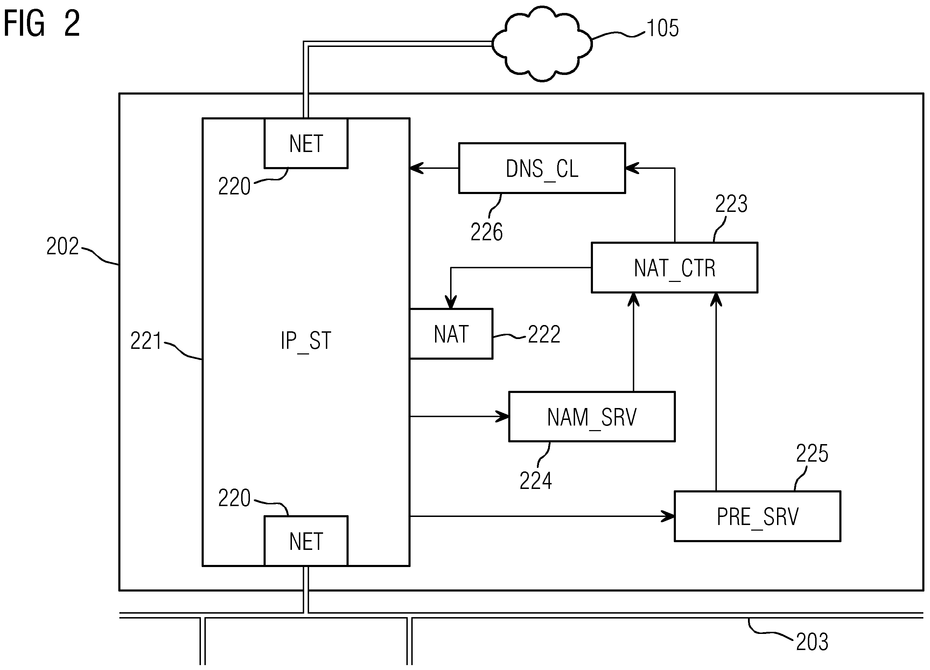

Aus den ersten IPv6-Adressen der IPv6-Server-Einheiten und den für die IPv6-Server-Einheiten jeweils reservierten zweiten IPv4-Adressen ermittelt die Cloud-Dienst-Konfigurationseinheit 204 Adressumsetzungsregeln 242 und stellte diese an den Router bereit. Diese Adressumsetzungsregeln 242 werden durch eine Adressumsetzungseinheit 222 des Routers 202 (siehe auch Figur 2) für eine Adressumsetzung zwischen ersten IPv6-Adressen und zweiten IPv4-Adressen angewendet. Dabei werden die durch die Cloud-Dienst-Konfigurationseinheit 204 vom übergeordneten DNS-Server 104 abgerufenen Port-Nummern unverändert für die Adressumsetzung übernommen. Anhand der ersten IPv6-Adressen der IPv6-Server-Einheiten bzw. anhand der für die IPv6-Server-Einheiten jeweils reservierten zweiten IPv4-Adressen erstellt die Cloud-Dienst-Konfigurationseinheit 204 vorzugsweise Firewall-Regeln 243 und stellt diese zur Anwendung an das der Zelle 200 zugeordnete Firewall-System 201 bereit.

Die Cloud-Dienst-Konfigurationseinheit 204 oder der Router 202 entnimmt aus den vom übergeordneten DNS-Server 104 abgerufenen Fully Qualified Domain Names der IPv6-Server-Einheiten vorzugsweise jeweils einen Host-Name-Anteil, z.B. "mindsphere" aus "mindsphere.tenant.org", und erzeugt aus den Host-Name-Anteilen sowie aus einem der jeweiligen Zelle 200 zugeordneten Domänennamen, z.B. "cell2.plant1.tenant.org", innerhalb der Zelle 200 durch die IPv4-Automatisierungsgeräte 206 verwendbare Fully Qualified Domain Names, z.B. "mindsphere.cell2.plant1.tenant.org". Dementsprechend fordert die Cloud-Dienst-Konfigurationseinheit 204 für die IPv6-Server-Einheiten eine Erfassung dieser mit lokaler Gültigkeit erzeugten Fully Qualified Domain Names als zugeordnete Servernamen im lokalen DNS-Server 205 der Zelle 200 an. Somit können IPv4-Automatisierungsgeräte 206 ein Zell-individuelles Namenssystem nutzen, das von einem durch den übergeordneten DNS-Server 104 verwalteten Namensraum unabhängig ist.

Entsprechend Figur 2 weist der Router 202 eine kombinierte Vermittlungsfunktionseinheit 221 zur Verarbeitung eines IPv4-Kommunikationsprotokollstapels und zur Verarbeitung eines IPv6-Kommunikationsprotokollstapels auf. Außerdem weist der Router 202 einen ersten und einen zweiten Kommunikationsnetzadapter 220 auf, über den er mit dem Weitverkehrsnetz 105 bzw. mit dem Zell-individuellen Teilnetz 203 verbunden ist. Jeder Kommunikationsnetzadapter 220 umfasst eine durch eine PHY-Funktionseinheit realisierte Sende- und Empfangseinheit und eine durch eine MAC-Funktionseinheit realisierte Steuerungseinheit zur Koordination eines Zugriffs auf ein Kommunikationsmedium. Die Vermittlungsfunktionseinheit 221 des Routers 202 greift jeweils über einen Kommunikationsnetzadapter-Treiber auf den jeweiligen Kommunikationsnetzadapter 220 zu.

Zusätzlich weist der Router 202 eine Namens- oder Konfigurationsdienstkomponente 224 auf, die innerhalb der jeweiligen Zelle 200 IPv4-Adressen und zugeordnete Gerätenamen der IPv4-Automatisierungsgeräte 206 erfasst. Darüber hinaus ist der Adressumsetzungseinheiten 222 ist ein adaptiver NAT-Controller 223 (Network Address Translation) zugeordnet, der aus einem der jeweiligen Zelle 200 individuell zugeordneten IPv6-Präfix und den IPv4-Adressen der IPv4-Automatisierungsgeräte jeweils eine virtuelle IPv6-Adresse berechnet. Für eine Bereitstellung des zugeordneten IPv6-Präfixes an den NAT-Controller 223 ist jeweils eine Präfix-Dienstkomponente 225 vorgesehen, die hierzu auf den Kommunikationsnetzadapter 220 für das Weitverkehrsnetz 105 zugreift. Aus den berechneten virtuellen IPv6-Adressen und den IPv4-Adressen der IPv4-Automatisierungsgeräte 206 ermittelt der NAT-Controller 223 für die IPv4-Automatisierungsgeräte 206 innerhalb der jeweiligen Zelle 200 Adressumsetzungsregeln, die durch die zugeordnete Adressumsetzungseinheit 222 angewendet werden.

Außerdem umfasst der Router 202 einen DDNS-Client 226 für dynamisches DNS, der für die IPv4-Automatisierungsgeräte 206 seiner Zelle 200 eine Erfassung der berechneten virtuellen IPv6-Adressen und der zugeordneten Gerätenamen im übergeordneten DNS-Server 104 anfordert. Bei einer erfolgreichen Anforderung werden die berechneten IPv6-Adressen und die zugeordneten Gerätenamen im übergeordneten DNS-Server 104 gespeichert, der diese als Namensdienst insbesondere an IPv6-basierte DNS-Clients bereitstellt, die über das Weitverkehrsnetz 105 mit der jeweiligen Zelle 200 verbunden sind.

Die Namens- oder Konfigurationsdienstkomponente 224 kann als Namensdienstkomponente eines konfigurationslosen Namensdienstes ausgestaltet sein und IPv4-Adressen sowie zugeordnete Gerätenamen der jeweiligen IPv4-Automatisierungsgeräte 206 entsprechend einem Namensauflösungsprotokoll erfassen. Beispielsweise können die IPv4-Adressen und die zugeordneten Gerätenamen entsprechend Discovery and Configuration Protocol (DCP) oder multicast Domain Name System Protocol (mDNS) erfasst werden. Entsprechend einer alternativen Ausführungsform kann die Namens- oder Konfigurationsdienstkomponente 224 als Konfigurationsdienstkomponente ausgestaltet sein und Gerätenamen der jeweiligen IPv4-Automatisierungsgeräte 206 entsprechend Dynamic Host Control Protocol (DHCP), Version 4, Option 61 mittels eines jeweils gerätseitig spezifizierten DHCP Client Identifier erfasst werden. Wenn durch eine DHCP-Konfigurationsdienstkomponente IPv4-Adressen für die IPv4-Automatisierungsgeräte 206 vergeben werden, liegen in diesem Fall entsprechende Adressinformationen dort bereits vor und brauchen nicht gesondert abgefragt zu werden.

Zur Berechnung einer jeweiligen virtuellen IPv6-Adresse wird vorzugsweise jeweils ein Schnittstellenidentifikator gebildet, dessen oberste 32 Bit einen einstellbaren Wert aufweisen und dessen unterste 32 Bit aus der jeweiligen IPv4-Adresse gebildet werden. Auf diese Weise wird eine Kollision mit per Stateless Address Autoconfiguration (SLAAC) aus MAC-Adressen gebildeten IPv6-Adressen vermieden, wenn zusätzlich IPv6-basierte Automatisierungs- bzw. Kommunikationsgeräte in den Zellen betrieben werden. Somit ermöglicht beschriebene Berechnung virtueller IPv6-Adressen einen Parallelbetrieb von IPv4-basierten Geräten, für die beschriebene Adressumsetzung durchgeführt wird, mit IPv6-basierten Automatisierungs- bzw. Kommunikationsgeräten. Dies gilt insbesondere auch bei Verwendung eines gemeinsamen Präfixes für IPv4- und IPv6-basierte Geräte.

Eine Adressumsetzung muss außerdem nicht für jedes IPv4-basierte Gerät einzeln aktiviert werden, sondern sie kann stattdessen für sämtliche IPv4-basierten Geräte innerhalb einer Zelle 200 bzw. eines Teilnetzes veranlasst werden. Dies ermöglicht eine signifikante Reduktion der Anzahl der durch die jeweilige Adressumsetzungseinheit 222 anzuwendenden Adressumsetzungsregeln. Vorteilhafterweise ist jeder Zelle 200 ein spezielles IPv6-Präfix zugeordnet, das nur für aus IPv4-Adressen berechnete virtuelle IPv6-Adressen verwendet wird und ein off-link Präfix ist. Link-lokale bzw. on-link Präfixe sind dagegen bei einer Berechnung von virtuellen IPv6-Adressen aus IPv4-Adressen ausgeschlossen.

Insbesondere durch den adaptiven NAT-Controller 223 sichergestellt, dass selbst bei vielen identisch in Serie installierten Zellen 200 allen IPv4-Automatisierungsgeräten 206 mit identischer IPv4-Adresse voneinander unterscheidbare virtuelle IPv6-Adressen zugeordnet werden. Den Zellen 200 sind hierzu nämlich unterschiedliche IPv6-Präfixe zugeordnet. Diese IPv6-Präfixe können insbesondere mittels Prefix Delegation (PD) entsprechend IETF RFC 6147 automatisiert an die Subnetze darstellenden Zellen 200 zugewiesen werden. Der adaptive NAT-Controller 223 berechnet Adressen neu, sobald sich Gerätenamen ändern, etwa durch Erlöschen oder Hinzufügen, bzw. sobald sich Präfixe ändern.

## Patentansprüche

1. Verfahren zur Bereitstellung von Diensten durch ein Server-System an Automatisierungsgeräte eines industriellen Automatisierungssystems, bei dem
- das industrielle Automatisierungssystem zumindest ein Teilnetz (200) mit einer Teilnetz-Konfigurationseinheit (204) und mehreren IPv4-Automatisierungsgeräten (206) umfasst, denen ausschließlich IPv4-Adressen zugeordnet sind,
- das Server-System (101) Dienste bereitstellende vorgegebene Server-Einheiten umfasst, denen aus dem Teilnetz (200) nicht erreichbare IPv4-Adressen oder ausschließlich IPv6-Adressen zugeordnet sind,
- die Teilnetz-Konfigurationseinheit (204) von zumindest einem übergeordneten Namensdienst-Server (104) zu den vorgegebenen Server-Einheiten erste IPv4- oder IPv6-Adressen, zugeordnete Servernamen und Dienst-Spezifikationen abruft,
- die Teilnetz-Konfigurationseinheit (204) für die vorgegebenen Server-Einheiten jeweils zumindest eine innerhalb des Teilnetzes verfügbare zweite IPv4-Adresse reserviert,
- die Teilnetz-Konfigurationseinheit (204) für die vorgegebenen Server-Einheiten eine Erfassung der reservierten zweiten IPv4-Adressen, der zugeordneten Servernamen und der Dienst-Spezifikationen in einem Namensdienst-Server (205) des Teilnetzes (200) anfordert,
- die IPv4-Automatisierungsgeräte (206) Namensauflösungsanfragen und/oder Anfragen zu verfügbaren Diensten an den Namensdienst-Server (205) des Teilnetzes (200) richten,
- die IPv4-Automatisierungsgeräte (206) Transportschicht-Verbindungen zu vorgegebenen Server-Einheiten zur Nutzung bereitgestellter Dienste mittels vom Namensdienst-Server (205) des Teilnetzes (205) abgefragter Adressinformationen (251) und mittels eines dem Teilnetz (200) zugeordneten Routers (202) aufbauen, der eine Adressumsetzungseinheit (222) umfasst,
- die Teilnetz-Konfigurationseinheit (204) aus den ersten IPv4- oder IPv6-Adressen der vorgegebenen Server-Einheiten und den für die vorgegebenen Server-Einheiten jeweils reservierten zweiten IPv4-Adressen Adressumsetzungsregeln (242) ermittelt und an den Router (202) bereitstellt,
- die Adressumsetzungseinheit (222) des Routers (202) die bereitgestellten Adressumsetzungsregeln (242) für eine Adressumsetzung zwischen ersten IPv4- oder IPv6-Adressen und zweiten IPv4-Adressen anwendet.

2. Verfahren nach Anspruch 1,
bei dem die IPv4-Automatisierungsgeräte (206) jeweils eine Vermittlungsfunktionseinheit zur Verarbeitung eines IPv4-Kommunikationsprotokollstapels umfassen und bei dem vorgegebene IPv6-Server-Einheiten, denen ausschließlich IPv6-Adressen zugeordnet sind, jeweils eine Vermittlungsfunktionseinheit zur Verarbeitung eines IPv6-Kommunikationsprotokollstapels umfassen.

3. Verfahren nach Anspruch 2,
bei dem die IPv4-Automatisierungsgeräte (206) keine Vermittlungsfunktionseinheiten zur Verarbeitung eines IPv6-Kommunikationsprotokollstapels umfassen und bei dem die vorgegebenen IPv6-Server-Einheiten keine Vermittlungsfunktionseinheiten zur Verarbeitung eines IPv4-Kommunikationsprotokollstapels umfassen.

4. Verfahren nach einem der Ansprüche 1 bis 3,
bei dem die Teilnetz-Konfigurationseinheit (204) zu vorgegebenen IPv6-Server-Einheiten, denen ausschließlich IPv6-Adressen zugeordnet sind, AAAA Resource Records entsprechend IETF RFC 3596 und zu den bereitgestellten Diensten SRV Resource Records entsprechend IETF RFC 2782 und/oder IETF RFC 6335 vom übergeordneten Namensdienst-Server (104) abruft.

5. Verfahren nach Anspruch 4,
bei dem die Teilnetz-Konfigurationseinheit (204) zu den vorgegebenen IPv6-Server-Einheiten Fully Qualified Domain Names und zu den bereitgestellten Diensten Port-Nummern vom übergeordneten Namensdienst-Server (104) abruft.

6. Verfahren nach Anspruch 5,
bei dem die Teilnetz-Konfigurationseinheit (204) oder der Router (202) aus den vom übergeordneten Namensdienst-Server (104) abgerufenen Fully Qualified Domain Names der vorgegebenen IPv6-Server-Einheiten jeweils einen Host-Name-Anteil entnimmt und aus den Host-Name-Anteilen sowie aus einem dem Teilnetz (200) oder einer jeweiligen Automatisierungszelle zugeordneten Domänennamen innerhalb des Teilnetzes (200) durch die IPv4-Automatisierungsgeräte (206) verwendbare Fully Qualified Domain Names erzeugt.

7. Verfahren nach Anspruch 6,
bei dem die Teilnetz-Konfigurationseinheit (204) für die vorgegebenen IPv6-Server-Einheiten eine Erfassung der durch die Teilnetz-Konfigurationseinheit (204) erzeugten Fully Qualified Domain Names als zugeordnete Servernamen im Namensdienst-Server (205) des Teilnetzes (200) anfordert.

8. Verfahren nach einem der Ansprüche 1 bis 7,
bei dem die Teilnetz-Konfigurationseinheit (204) für die vorgegebenen Server-Einheiten jeweils eine innerhalb des Teilnetzes (200) verfügbare zweite IPv4-Adresse durch eine IPv4-Adressanforderung bei einem DHCP-Server innerhalb des Teilnetzes (200) reserviert.

9. Verfahren nach einem der Ansprüche 1 bis 7,
bei dem die Teilnetz-Konfigurationseinheit (204) eine DHCP-Server-Funktionseinheit oder eine DHCP-Relay-Funktionseinheit umfasst und bei dem die innerhalb des Teilnetzes (200) verfügbaren zweiten IPv4-Adressen den vorgegebenen Server-Einheiten mittels der DHCP-Server-Funktionseinheit oder DHCP-Relay-Funktionseinheit der Teilnetz-Konfigurationseinheit (204) zugeordnet werden.

10. Verfahren nach einem der Ansprüche 1 bis 9,
bei dem die Teilnetz-Konfigurationseinheit (204) anhand der ersten IPv4- oder IPv6-Adressen der vorgegebenen Server-Einheiten und/oder anhand der für die vorgegebenen Server-Einheiten jeweils reservierten zweiten IPv4-Adressen Firewall-Regeln (243) erstellt und an ein dem Teilnetz (200) zugeordnetes Firewall-System (201) zur Anwendung bereitstellt.

11. Verfahren nach einem der Ansprüche 1 bis 10,
bei dem die durch die vorgegebenen Server-Einheiten bereitgestellten Dienste Anwendungen und/oder Funktionen zur System-, Prozess- und/oder Geräteüberwachung, zur Gerätesteuerung und/oder -konfiguration, zur Erfassung und/oder Analyse von den IPv4-Automatisierungsgeräten zugeordneten Messwerten und/oder Zustandsinformationen und/oder Kommunikations-und/oder Automatisierungsfunktionen umfassen.

12. Verfahren nach einem der Ansprüche 1 bis 11,
bei dem der Router eine erste Vermittlungsfunktionseinheit zur Verarbeitung eines IPv4-Kommunikationsprotokollstapels und eine zweite Vermittlungsfunktionseinheit zur Verarbeitung eines IPv6-Kommunikationsprotokollstapels aufweist.

13. Verfahren nach Anspruch 12,
bei dem jede der beiden Vermittlungsfunktionseinheiten über einen Kommunikationsnetzadapter-Treiber auf einen Kommunikationsnetzadapter des Routers zugreift und bei dem jeder Kommunikationsnetzadapter eine Sende- und Empfangseinheit und eine Steuerungseinheit zur Koordination eines Zugriffs auf ein Kommunikationsmedium umfasst.

14. Verfahren nach Anspruch 13,
bei dem der Router über einen ersten Kommunikationsnetzadapter mit zumindest einem IPv4-Automatisierungsgerät verbunden ist und bei dem der Router über einen zweiten Kommunikationsnetzadapter mit zumindest einer vorgegebenen Server-Einheit verbunden ist.

15. Verfahren nach einem der Ansprüche 1 bis 14,
bei dem der Router über ein Weitverkehrsnetz mit dem Server-System verbunden ist.

16. Verfahren nach einem der Ansprüche 1 bis 15,
bei dem die Teilnetz-Konfigurationseinheit zu den durch die vorgegebenen Server-Einheiten bereitgestellten Diensten Port-Nummern vom übergeordneten Namensdienst-Server abruft und bei dem der Router die Port-Nummern unverändert für die Adressumsetzung übernimmt.

17. Verfahren nach einem der Ansprüche 1 bis 16,
bei dem die Teilnetz-Konfigurationseinheit für die IPv4-Automatisierungsgeräte aus einem dem Teilnetz, einer jeweiligen Automatisierungszelle oder dem Router zugeordneten IPv6-Präfix und den IPv4-Adressen der IPv4-Automatisierungsgeräte jeweils eine IPv6-Adresse berechnet und bei dem die Teilnetz-Konfigurationseinheit für die IPv4-Automatisierungsgeräte aus den IPv4-Adressen der IPv4-Automatisierungsgeräte und den berechneten IPv6-Adressen Adressumsetzungsregeln ermittelt und an den Router für eine Adressumsetzung bereitstellt.

18. Verfahren nach einem der Ansprüche 1 bis 17,
bei dem der übergeordnete Namensdienst-Server und der Namensdienst-Server des Teilnetzes Domain Name System Server sind.

19. Verfahren nach einem der Ansprüche 1 bis 17,
bei dem das Teilnetz zumindest eine mehrere Automatisierungsgeräte umfassende Zellen des industriellen Automatisierungssystems umfasst.

20. Konfigurationseinheit für ein industrielles Automatisierungssystem zur Durchführung eines Verfahrens nach einem der Ansprüche 1 bis 19,
- wobei das industrielle Automatisierungssystem ein Teilnetz mit mehreren IPv4-Automatisierungsgeräten umfasst, denen ausschließlich IPv4-Adressen zugeordnet sind, und wobei ein Server-System Dienste an Automatisierungsgeräte bereitstellende vorgegebene Server-Einheiten umfasst, denen aus dem Teilnetz nicht erreichbare IPv4-Adressen oder ausschließlich IPv6-Adressen zugeordnet sind,
- wobei die Konfigurationseinheit dafür ausgestaltet und eingerichtet ist, von zumindest einem übergeordneten Namensdienst-Server zu den vorgegebenen Server-Einheiten erste IPv4- oder IPv6-Adressen, zugeordnete Servernamen und Dienst-Spezifikationen abzurufen,
- wobei die Konfigurationseinheit ferner dafür ausgestaltet und eingerichtet ist, für die vorgegebenen Server-Einheiten jeweils zumindest eine innerhalb des Teilnetzes verfügbare zweite IPv4-Adresse zu reservieren,
- wobei die Konfigurationseinheit ferner dafür ausgestaltet und eingerichtet ist, für die vorgegebenen Server-Einheiten eine Erfassung der reservierten zweiten IPv4-Adressen, der zugeordneten Servernamen und der Dienst-Spezifikationen in einem Namensdienst-Server des Teilnetzes anzufordern,
- wobei die Konfigurationseinheit ferner dafür ausgestaltet und eingerichtet ist, aus den ersten IPv4- oder IPv6-Adressen der vorgegebenen Server-Einheiten und den für die vorgegebenen Server-Einheiten jeweils reservierten zweiten IPv4-Adressen Adressumsetzungsregeln zu ermitteln und an einen dem Teilnetz zugeordneten Router für eine Adressumsetzung bei durch die IPv4-Automatisierungsgeräte aufgebauten Transportschicht-Verbindungen zu vorgegebenen Server-Einheiten bereitzustellen.
